# EUROPÄISCHE PATENTANMELDUNG

(11) **EP 1 087 276 A1**
(43) Veröffentlichungstag der Anmeldung: **28.03.2001**
(21) Anmeldenummer: 99118584.4
(22) Anmeldetag: 21.09.1999
(51) Int. Cl.: G05B 19/4069, G05B 19/418

(54) **Eine Methode zur Simulation und/oder Überwachung und/oder Steuerung einer industriellen Anlage**

(71) Anmelder: Va Tech Elin GmbH, 1140 Wien (AT)
(72) Erfinder: Hartinger, Michael, 8160 Weiz (AT); Krausler, Werner, 8160 Weiz (AT)
(74) Vertreter: Rieberer, Stefan, Dipl.-Ing.

(57) **Zusammenfassung**

Die Erfindung betrifft eine Methode zur Darstellung und/oder Verwaltung von Informationen betreffend eine industrielle Anlage und deren Einrichtungen bzw. Teile solcher Einrichtungen, mittels einer oder mehrerer elektronischer Datenverarbeitungseinheiten. Dabei werden Prozeßparameter betreffend den Betrieb der industriellen Anlage oder deren Einrichtungen bzw. Teile in Verbindung mit Informationen der industriellen Anlage deren Einrichtungen oder eines Teiles, visualisiert in eine dreidimensionale Simulation dieser Anlage bzw. Einrichtung oder Teiles eingebunden und abrufbar. Dadurch, dass Informationen betreffend beispielsweise eine industrielle Anlage in eine 3-dimensionale Simulation dieser industriellen Anlage eingebunden werden, entsteht für den Anwender die Möglichkeit eine Industrieanlage, und/oder ein Kraftwerk, und/oder eine elektrische Maschine, vorzugsweise einen Generator oder eine Turbine und deren (dessen) Einrichtungen in einer dreidimensionalen Simulation zu studieren, und dabei gleichzeitig einen Zugriff auf diese Anlage betreffende Informationen zu besitzen.

## Beschreibung

Die Erfindung betrifft eine Methode zur Simulation und/oder Überwachung und/oder Steuerung einer industriellen Anlage und deren Einrichtungen bzw. Teile solcher Einrichtungen, mittels einer oder mehrerer elektronischer Datenverarbeitungseinheiten.

Informationen sind ein wichtiges Gut unserer Gesellschaft. Der Umfang dieser Informationen nimmt in allen Lebensbereichen zu, wobei gleichzeitig immer mehr Menschen Zugriff auf diese Informationen fordern. Eine herkömmliche Informationssammlung und -verteilung, etwa auf Basis einer Archivierung von Informationen in gedruckter Form stößt dabei an ihre Grenzen. Um solche Informationsmengen zu organisieren und gleichzeitig einen kontrollierten Zugriff darauf zu ermöglichen, werden neue Methoden und Arbeitsplätze zum Informationsmanagement, etwa rechnergestützte Informationsverwaltungen, benötigt.

Speziell im Bereich der Technik ist eine Informationssammlung und -verteilung für eine technische Weiterentwicklung unerläßlich. In einem Betrieb zur Erzeugung elektrischer Maschinen etwa, fällt die Information zu einer Maschine in verschiedenen Abteilungen an, wodurch die Information jeweils in diesen Abteilungen gesammelt wird, und sich so einem allgemeinen und einfachem betriebsinternen Zugriff zumeist entzieht. Durch diese Zugangsbeschränkung wird jedoch ein beträchtliches Innovationspotential aufgegeben, das nur durch den Austausch von Informationen entsteht.

Im Stand der Technik sind verschiedene Verfahren zur Verwaltung von Informationen bekannt, insbesondere auch solche, die sich einer Erzeugung virtueller Systeme, insbesondere virtueller Räume, bedienen. Simulationen von Industrieanlagen werden zumeist aber nur unter dem Gesichtspunkt einer Anlagen- und Prozeßüberwachung ("Monitoring") ausgeführt, und sind dementsprechend wenig für eine Verwaltung vonInformationen, im größeren Maßstab, geeignet.

Eine Einrichtung dieser Art ist nach DE39305841A1 bekannt. Mit dieser Erfindung wird ein Arbeitsplatz vorgeschlagen, der durch mehrere Monitore eine Überwachung einer Industrieanlage, sowie der ablaufenden Prozesse gestattet. Dabei werden auf einem Monitor mittels mehrerer Fenster verschiedene Informationen zur Anlage, zum Status der Anlage, sowie Informationen zum Prozeß angezeigt. Die Darstellung der Informationen wird durch ein graphisches Expertensystem unterstützt.

Bekannt ist weiters gemäß US5930154A ein auf elektronische Datenverarbeitungseinheiten aufgesetztes System und Verfahren zur Informationsverwaltung, Modellierung und Simulation von komplexen Systemen. Dabei werden in zweidimensionaler Form komplexe Systeme und Prozesse simuliert, wobei zusätzlich eine eingebundene graphische Informationsverwaltung vorgesehen ist. Diese graphische Informationsverwaltung besteht im wesentlichen aus einer sogenannten Wissendatenbank, aus der Informationen ausgelesen, und in die Informationen eingelesen werden können. Dadurch, dass im Bereich der technischen Anwendung, insbesondere im Maschinenbau 3-dimensionale anstatt 2-dimensionaler Darstellung verwendet wird, ist diese Erfindung, weil sie für eine 2-dimensionale Darstellung ausgeführt ist, in einem maschinenbaulichen Betrieb weniger geeignet.

Der Erfindung liegt daher die Aufgabe zugrunde, eine variabel einsetzbare und verbesserte Methode zur Simulation und/oder Überwachung und/oder Steuerung einer industriellen Anlage und/oder deren Einrichtungen bzw. Teile solcher Einrichtungen mittels einer oder mehrerer elektronischer Datenverarbeitungseinheiten zu entwickeln.

Diese Aufgabe wird erfindungsgemäß dadurch gelöst, Prozeßparameter betreffend den Betrieb der industriellen Anlage oder deren Einrichtungen bzw. Teile in Verbindung mit technischen Informationen betreffend den Aufbau der industriellen Anlage deren Einrichtungen oder eines Teiles, visualisiert in eine dreidimensionale Simulation dieser Anlage bzw. Einrichtung oder Teiles eingebunden und abrufbar werden.

Durch die Einbindung der Information in die Simulation einer Industrieanlage, insbesondere einer realen Industrieanlage, wird die Information graphisch, insbesondere räumlich, einsichtig zuordenbar, und es entsteht eine eindeutige hierarchische Organisation der Informationen. Es ist somit keine besondere Unterrichtung des Anwenders über Datenbankstrukturen mehr notwendig, da er intuitiv den Standort der benötigte Information erkennt.

Nach einem Merkmal der Erfindung können je nach Vorgabe und Anwendungsprofil einem oder mehreren Bestandteilen der Simulation (sog. virtuellen Objekten) Informationen zugeordnet werden. Denkbar ist weiters auch eine Informationssammlung zu einem System von Bestandteilen (virtuellen Objekten), die an einem Punkt der Simulation dargestellt werden kann, oder wenn nötig eine beliebig tiefere Organisationsform der Informationen.

In einer bevorzugten Ausführungsform des Erfindungsgegenstandes wird der virtuelle örtliche und/oder zeitliche Zusammenhang verschiedener Informationen zu Bestandteilen der Simulation dargestellt und so erfahrbar. Einerseits enthält die Simulation als solches bereits einen gewissen Informationsgehalt, insbesondere über die räumliche Aufteilung, und die räumliche Ausbildungsform der verschiedenen Bestandteile der simulierten Anlage, andererseits können die jeweiligen Informationen an bestimmten Orten innerhalb der Simulation plaziert werden, um auf diese Weise eine Zugehörigkeit der Informationen zu bestimmten Bestandteilen der Simulation zu verdeutlichen. In weiterer Folge kann auch der zeitliche Zusammenhang von Informationen erfahren werden, als sich beispielsweise die Darstellungsform oder der Inhalt der Informationen abhängig von der Zeit ändert.

In einer weiteren bevorzugten Ausführungsform kann durch ein virtuelles Betätigen, insbesondere ein virtuelles Berühren eines Bestandteiles einer Simulation, diesem Bestandteil zugeordnete Informationen in der Simulation abgerufen und dargestellt werden. Durch dieses Merkmal ist die unmittelbare Zuordnung der Information zu einem bestimmten Bestandteil der Simulation für den Anwender eindeutig nachvollziehbar, wobei durch das virtuelle Betätigen, bzw. durch das virtuelle Berühren des Bestandteiles der Simulation, durch beispielsweise einen virtuellen Zeiger, ein Maximum an Vereinfachung des Zugriffes auf diese Information erreicht wird.

Nach einem weiteren Merkmal der Erfindung kann durch Eingabe mindestens eines kennzeichnenden Begriffes und/oder Parameters, die durch diesen Begriff und/oder Parameter gekennzeichnete Information, in ihrem virtuellen Zusammenhang in der Simulation durch einen Navigator lokalisiert werden. Dadurch ist auch eine systematische Suche der Informationen mittels kennzeichnender Begriffe möglich, wobei gleichzeitig bei Bedarf die Information in der Simulation lokalisiert werden kann.

Eine Ausführungsform des Erfindungsgegenstandes sieht eine unidirektionale Verbindung der Simulation mit einer realen Anlage vor, und ermöglicht damit eine Überwachung bzw. ein sogenanntes "Monitoring" der betreffenden Anlage. Dabei werden Echtzeitinformationen durch die Methode zur Darstellung und/oder Verwaltung abgelegt, und bei Bedarf dargestellt.

Eine weitere Ausführungsform des Erfindungsgegenstandes sieht vor, dass graphische Expertensysteme die graphische Umsetzung der Informationen im Informationsmanagement unterstützen. Durch diese Expertensysteme wird insbesondere die Form der Darstellung zum Beispiel in Hinblick auf Übersichtlichkeit optimiert. Des weiteren ist auch eine Optimierung bezüglich Eingabe und Bedienung möglich.

Weiteren Merkmalen des Erfindungsgegenstandes zufolge sind insbesondere die Darstellung und/oder Verwaltung von Konstruktionszeichnungen und/oder Herstellerspezifikationen, insbesondere sogenannter Datenblätter, und/oder Informationen betreffend Betriebsabläufe, und/oder Informationen betreffend Montage und/oder Wartung einer industriellen Anlage und/oder deren Einrichtungen bzw. Teile vorgesehen.

Insbesondere das Zusammenwirken der Methode zur Darstellung und/oder Verwaltung von Informationen mit einer dreidimensionalen Simulation erweist sich als besonders nützlich.

Für den Anwender besteht dabei die Möglichkeit über seinen Arbeitsplatz beispielsweise Informationen zum Aufbau, und zum Betrieb einer simulierten Anlage abzurufen, und diese Industrieanlage in ihrem virtuellen Zusammenwirken zu studieren.

Im folgenden wird anhand von Beispielen der Erfindungsgegenstand näher ausgeführt, und nicht einschränkende Ausführungsbeispiele der Erfindung, insbesondere mit Bezug auf die Implementierung des Erfindungsgegenstandes in eine Methode bzw. einen Arbeitsplatz zur Simulation einer Industrieanlage, insbesondere eines Generators zur Erzeugung elektrischer Energie, teilweise anhand von Zeichnungen näher erläutert. Es zeigen:
Fig. 1 schematisch die Darstellung, insbesondere die Organisation einer bevorzugten Ausführungsform des Erfindungsgegenstandes eingebunden in eine Methode bzw. einen Arbeitsplatz zur Simulation einer Industrieanlage

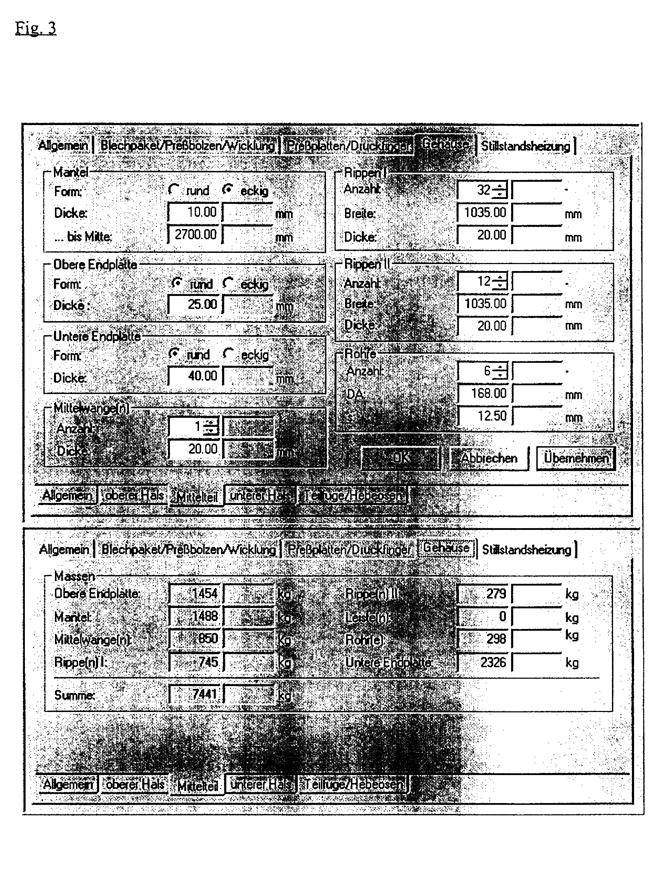

Fig. 2 ein Beispiel eines Ausgabefensters zur Darstellung des Cash-Flow in Abhängigkeit von der Betriebsdauer
Fig. 3 ein Beispiel eines Input/Output- Windows
Fig. 4 ein Beispiel eines Anlagenschaubildes
Fig. 5 in schematischer Form die Organisation der mathematischen Modelle, bzw. der diese Modelle beinhaltenden Programme für die Modellierung eines Generators zur Simulation einer Industrieanlage, insbesondere eines Generators
Fig. 6 in schematischer Form die Organisation des Programmes SYMAENT zur elektromagnetischen Auslegung einer Synchronmaschine zur Simulation einer Industrieanlage, insbesondere eines Generators
Fig. 7 schematisch einen nicht einschränkenden Verfahrensablauf zur mechanischen konstruktiven Auslegung eines Generators, sowie zur Erzeugung von Objekten zur Simulation eines Generators mittels mathematischer Methoden
Fig. 8 schematisch eine bevorzugte Organisationsform der Verwaltung von Daten

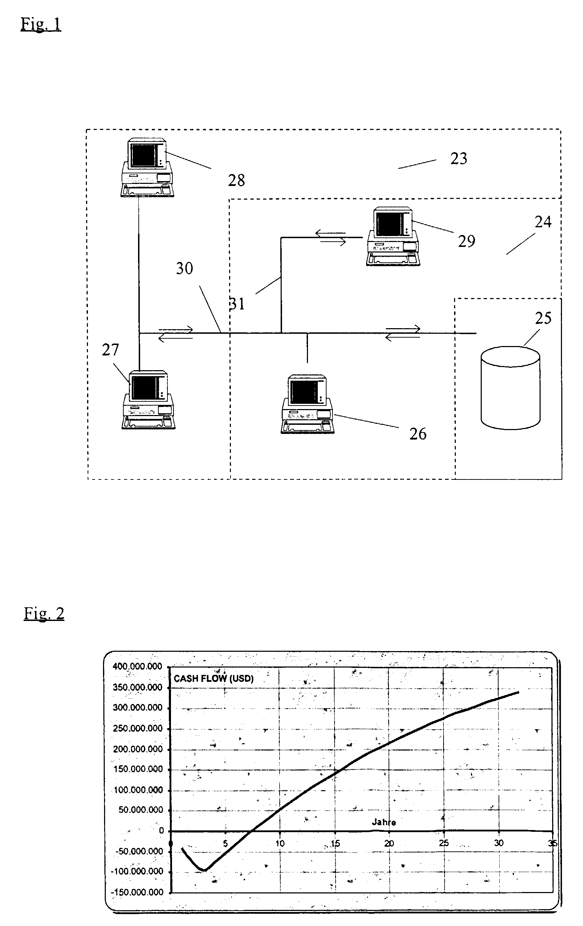

Die in **Fig. 1** dargestellte Organisation einer Methode und eines Arbeitsplatzes zur Simulation einer Industrieanlage bezieht sich auf eine besonders bevorzugte Ausführungsform des Erfindungsgegenstandes, welche wie folgt beschrieben wird:

Als Ausgangspunkt und als zentrales Modul dient eine sogenannte Wissensdatenbank (K-DB) **25**, welche vorzugsweise als verteilte Datenbank ausgeführt ist (Client-Server-Technik). Über bidirektionale Datenleitungen bzw. Netzwerke **30** und **31** steht diese Datenbank mit verschiedenen Client-Modulen in Kontakt, wobei über diese Datenleitungen einerseits die Datenbank abgefragt und mit Daten beliefert wird, andererseits die Client-Module von der Datenbank mit Daten versorgt werden. Die Client-Module **26, 27, 28, 29** sind über Datenleitungen sowohl im Intemet/Intranet **23**, als auch im sogenannten LAN erreichbar, und umfassen vorzugsweise einen Wissensnavigator, nachfolgend mit Avigator **28** bezeichnet, zur Auffindung und Darstellung von Informationen der Wissensdatenbank, ein Anlagen-View **27,** zum Monitoring oder Regeln/Steuern einer Anlage, ein Virtuelles Mock-Up **26**, insbesondere zum virtuellen Prototyping einer Anlage, sowie ein Questionary **29,** zur Lokalisierung eines Bestandteiles einer Anlage (On-Line-Finder mit Path-Viewer).

Die Methode und der Arbeitsplatz zur Simulation einer Industrieanlage dieser bevorzugten Ausführungsform sind durch eine Reihe von Besonderheiten gekennzeichnet:
- Kern der Applikation bildet eine objektorientierte **Wissensdatenbank in Client-Server-Technik (WDB),** die alle für die Applikation benötigten Anlagedaten enthält. Jede Dateninteraktion der Softwaremodule erfolgt über diese Datenbasis.
- Die Applikation versteht sich als **Expertensystem für Anlagenbau und Anlagenrefurbishment.**
- Die **Applikation ist modular** aufgebaut. Die einzelnen Softwaremodule kommunizieren untereinander ausschließlich über die zentrale Wissensdatenbank.
- Die Applikation ist so strukturiert, dass sie als **verteilte Applikation in LAN und Intranet** sowie im Internet einsetzbar ist.
- Dem Umgang mit unvollständiger und ungenauer Information wird durch die **Verwendung der Fuzzy-Logic-Technik** Rechnung getragen.
- Die **Applikations-Server-Fähigkeit** gestattet Ressourcen optimal zuzuordnen und zu nutzen.
- Die Visualisierung der Anlage, der Anlagenzusammenhänge und Anlagenzustände erfolgt auch durch **Input-/Output-Windows,** und **interaktive graphische 3-D-Animationen.**
- Ein Wissensnavigator (**Avigator**) unterstützt beim schnellen Auffinden, und dient zur Eingabe und Ausgabe von Daten.

In dieser besonderen Ausführungsform bilden folgende Module (werden nachfolgend näher erläutert) die Methode zur Simulation einer Industrieanlage:
- Eine Wissensdatenbank, bzw. eine Wissensbasierte Anlagen-Datenbank (K-DB)
- Eine Konstruktions- und Designmaschine: Ein Modul zur konstruktiven Beschreibung und Auslegung einer Anlage mit allen Grundbauteilen.
- Ein Anlagen-Experte: Ein Expertensystem für Anlagenbau.
- Eine Simulations-Maschine: Ein Simulationstool für Vorgänge in Anlagen.
- Ein Kosten-Manager: Ein Tool zum Sammeln und zur Analyse von Kosten aller Art.
- Ein Investment-Analyser: Ein Tool zur Analyse aller Investmentfaktoren eines Refurbishments.
- Ein Anlagen-View & Control: Ein Tool zur Regelung und Steuerung einer in Betrieb befindliche Anlagen.
- Ein Avigator: Ein visuelles Front-End zur Darstellung aller Interaktionen zwischen Nutzer und Applikation.

Im folgenden Abschnitt werden zum besseren Verständnis einzelne Module detaillierter erläutert:

### Modul Wissens-Datenbank:

Im Zentrum der Applikation steht eine Wissensdatenbank, die alle Informationen über die zu beschreibende Anlage enthält. Die Dateninformation ist insofern komplett, als dass daraus alle Eigenschaften und jegliches Verhalten der Anlage ableitbar sind. Insbesondere wird in der Datenbank auch Wissen in Form von Methoden, welche technischen Gesetzmäßigkeiten und Zusammenhänge betreffen abgelegt.

Die Datenbank ist rein objektorientiert aufgebaut. Die Anlage wird dabei detailliert in ihren Anlagenteilen und selbst jeweils als Objekt abgelegt. Das technische Verhalten von Anlagenteilen bzw. der Anlagenteile untereinander wird über Objektmethoden abgelegt.

Der Zugriff auf die Anlage(-nteile) der K-DB erfolgt ebenfalls auf Basis von Objektmethoden.

In der K-DB ist die Client-Server-Technik als maßgebliche Technik zur Strukturierung der Daten verwendet.

Es erfolgt eine Aufgabenteilung dergestalt, dass einerseits eine zentrale, redundanzfreie und normalisierte Datenablage gebildet wird und dass andererseits auf diesen Datenbank-Server eine Anzahl von Client-Modulen unter Verwendung der definierten Zugriffsmethoden für die Objekte der Anlagenbeschreibung zugreifen können. Der Datenbank-Server arbeitet diese "Requests" ab und übermittelt dem Client-Modul das Ergebnis seiner Anfrage. Diese DB-Anfragen werden über unterschiedliche Netzwerkstrukturen wie LAN's, Intranetze oder dem Internet transportiert.

### Modul Konstruktionsmaschine:

Dieses Modul dient der konstruktiven Beschreibung und Auslegung einer Anlage aus Grundbauteilen.

Die elektromagnetische Berechnung stellt die Basis für die Konstruktive Auslegung durch die Konstruktionsmaschine dar. Aufgrund der Vorgabe von Turbinen- und Generatorhauptdaten und werden die elektormagnetischen Eigenschaften ermittelt und als Datenreihen in der K-DB abgelegt.

In IO-Windows und über die Anlagenvisulaisierungs des Avigators werden diese Daten bei Bedarf auch in geeigneter Form graphisch aufbereitet dargestellt.

Nach erfolgter elektormagnetischer Auslegung der Anlage kann diese konstruktiv selbständig vollautomatischen ausgelegt werden (NOASK-Lauf). Die zur Verfügung stehenden Erfahrungswerte, Tabellen, Kurven und Kennlinien werden automatisch mit der Suchmaschine des Anlagen-Experten ermittelt und aus de K-DB gelesen.

Diese konstruktive Grundauslegung kann dann manuell verbessert, geändert und erweitert werden. Jede so erfolgte Änderung wird laufend einer Sinnhaftigkeitsprüfung durch die K-DB unterzogen. So wird z.B. im Rahmen der Rotorkonstruktion laufen die Festigkeit der Kette mit der Rotorkonstruktion ermittelt. Für den Fall, dass die Beanspruchungen der Materialien zu hoch ist, wird die vorgenommene Konstruktionsänderung nicht akzeptiert.

So werden nacheinander alle Anlagenteile (Stator, Rotor, ...) dimensioniert und festgelegt.

Die Konstruktion selbst erfolgt mit permanenter Unterstützung durch den nachfolgend beschriebenen Anlagen-Experten, insbesondere der Suchmaschine.

### Modul Anlagen-Experte:

Das Modul Anlagenexperte ist ein Expertensystem des Anlagenbaues. Das gesammte Wissen über die Planung, die Errichtung und den Betrieb wird erfaßt und in der K-DB abgelegt.

Kern des Moduls ist ein Projektlexikon in dem alle Information (z.B. Technische Daten, Kostenaufstellung, Montageabläufe, Überlegungen zur Konstruktion) über die bearbeiteten Projekte gesammelt werden und mit einer Beschlagwortung versehen werden.

Alle im Zusammenhang mit einem Projekt erstellten Dokumente werden über ein professionelles Dokumentenmanagement den Anlagen bzw. Anlagenteilen zugeordnet und ebenfalls beschlagwortet.

Über eine Suchmaschine ist es schnell möglich auf die Daten im Projektlexikon und auf Dokumente des Dokumentenmanagements zuzugreifen.

Eine weiter Funktionalität des Anlagen-Experten wird durch die sogenannte Learning-Maschine ausgefüllt. Diese Softwarekomponente analysiert laufend die Datenveränderungen und versucht Ähnlichkeiten in der Vorgangsweise und/oder Gesetzmäßigkeiten in den Daten zu finden um den Benutzer der Suchmaschine sinnvolle Vorgangs- und Arbeitsweisen nahezulegen.

Gestellte Fragen an den Anlagen-Experten werden hinsichtlich des Ergebnisweges und des Sucherfolges protokolliert und analysiert. Korrekte Frage-Antwort-Kombinationen werden hinsichtlich des verwendeten Suchweges zur Antwortfindung optimiert. Unvollständige oder falsche Antworten können gemeinsam mit der Learning-Maschine vervollständigt oder richtiggestellt werden.

### Modul Simulation-Maschine:

Das Modul Simulation-Maschine beschäftigt sich mit der Bereitstellung von Dateninformationen über dynamische Prozesse in der Anlage.

Dieses Simulationstool verwendet die mathematische Modellierung von technischen Eigenschaften und Zusammenhängen als Hauptinstrument. Solcherart beschriebene Prozesse in der Anlage werden datentechnisch in der K-DB beschrieben.

Für eine konkrete zu ermittelnde Situation wird auf Basis dieser mathematischen Modellierung eine Datenserie ermittelt und in der K-DB abgelegt.

Die Formulierung der mathematischen Modelle erfolgt durch Add-In's in klassischen technischen Programmiersprachen (z.B. Fortran) oder in einer Simulationssprache (z.B. ACSL).

Die einzelnen Add-In's zur Simulation dynamischer Prozess bedienen sich außerdem vorhandener Daten schon realisierter Anlagen bzw. definierter Referenzanlagen um die Simulationergebnisse zu errechnen.

### Modul Anlagen-Refurbisher:

Mit dem Modul Anlagen-Refurbisher wird die Sinnhaftigkeit eines Anlagenrefurbishments an einer bestehenden Anlage untersucht.

Die entwickelten Refurbishmentvarianten werden als neu Anlagenvarianten auf Basis einer schon existierenden und in der K-DB beschriebenen Anlage projektiert. Hierzu werden alle Module in analoger Weise wie für die Neuprojektierung verwendet. Die Basis bildet aber eine schon in Betrieb befindliche Anlage.

Um die Notwendigkeit eines Refurbishments nachzuweisen bedient sich das Modul folgender drei Techniken:
- Potentialanalyse
- Schwachstellenanalyse
- Maßnahmenanalyse

Die Potentialanalyse geht davon aus, dass der Nutzen durch ein Refurbhisment in einer Verbesserung des Energiegewinns besteht und ein solcher Energiegewinn durch eine Erhöhung von Wirkungsgrad und Leistung erzielt werden kann.

Für die Refurbishmentvarianten wird das neue Wirkungsgradniveau und die neue Jahresleistung ermittelt und den jeweilig aktuellen Werten gegenübergestellt.

Daraus ergibt sich ein Energiegewinn der durch die entsprechende Refurbishmentvariante erzielt wird. Unter Miteinbeziehung der verschiedenen Stromtarife kann somit auf jährliche Mehreinnahmen geschlossen werden.

Die Schwachstellenanalyse versucht auf Basis der Wartungs- und Instandhaltungskosten bzw. der Anlagenlebensdauer ein Refurbishment zu begründen. In der K-DB verfügbare Erfahrungswerte für Wartungs- und Instandhaltungskosten für Anlagen - in Abhänigkeit bestimmter Anlagenparameter (Leistung, Alter, Generatortyp, ...) werden mit vorliegenden Werten verglichen und daraus eine Refurbishmentvariante erarbeitet. Die empirischen Wartungs- und Instandhaltungskosten nach dem Refurbisment dienen als Basis einer Refurbishmententscheidung.

Die Maßnahmenanalyse geht davon aus, dass ein bestimmter Kostenrahmen für ein Refurbisment zur Verfügung gestellt werden kann. Mehre Refurbishmentvarianten werden innerhalb dieses Kostenrahmens erarbeitet und jeweils eine Potentialanalyse hiefür durchgeführt.

### Modul Cost-Manager:

Der Cost-Manager sammelt die für die Kalkulation von Anlagen notwendigen Preise in der K-DB und stellt folgende Kosten innerhalb eines jeweiligen Gültigkeitsbereiches und einer Gültigkeitsregion zur Verfügung:
- Einkaufspreise für Grundmaterialien
- Einzelstückkosten
- Personalkosten
- Montagekosten
- Lieferkosten

Die Gesamtkosten werden auf Basis dieser Komponentenkosten ermittelt und es können die für das Projekt optimierten Kosten - in fast beliebiger Währung - ermittelt werden.

Die Kalkulation hierfür beinhaltet auch einen Vergleich der weltweit gültigen Fertigungs- und Materialkosten.

Aus der K-DB werden die Stundensätze der lokalen Fertigungsstätten zur Kostenkalkulation herangezogen.

Die Komponentenkosten werden für alle Anlagenteile ermittelt und bereitgestellt. Auch die nur teilweise Ermittlung von Kosten ist möglich (z.B. für den Einsatz bei Refurbishments).

Zu den Bauteilkosten der Anlage gehört unter Berücksichtigung einer lokalen Fertigung, auch die anfallenden Kosten für Verpackung, Transport und Montage.

Die Gesamtkosten der Anlage sollen jetzt kaufmännisch bearbeitet und visualisiert werden um einen Angebotspreis zu berechnen.

Die relevanten Faktoren setzten sich aus folgenden Parametern zusammen:
- Vollkosten in Relation zum Marktpreispotential - in neuen Märkten wird ein vergleichbarer Markt als Basis gewählt,
- Marktpreisanalyse auf Basis ähnlicher Konkurrenzsituation
- Der Faktor der Baustellenausrüstung
- Online-Kosten für Garantie-/Versicherung
- Aufschlag für Federführung
- Kosten für Lobbying
- Die Sicherstellung der Finanzierung mit den Online-Kosten für
- Örtliche / lokale Bankspesen
- Weltbankfinanzierung
- Selbstbehalt für Risiko
- Eintrittswahrscheinlichkeit
- ÖKB-Sicherstellung - Liste mit Raten
- Kreditspesen
- Freie Finanzierung

### Modul Investment-Analyser:

Der Investment-Analyser ermittelt für eine Anlagenprojektierung bzw. für ein Anlagenrefurbishment, dessen "Wirtschaftlichkeit".

Dies erfolgt durch rechnerische Gegenüberstellung von, für die Anlage ermittelte Parameter wie Anlagendimension, Jahresenergie, Leistung und Investitionskosten, Tarifen bzw. Tarifsystemen sowie Betriebs- u. Wartungskosten. Die sich daraus ergebende Wirtschaftlichkeit des Projektes wird in Form von Kennzahlen ausgedrückt.

Folgende Kennzahlen können auf Basis einer Investitionsrechnung ermittelt werden:
- Verzinsung des eingesetzten Kapitals
- Amortisationsdauer
- Kapitalwert
- Restwertbetrachtung (bei Refurbishment)
- Optimaler Investitonszeitpunkt (bei Refurbishment)
- Sensibiltätsanalyse des Ergebnis von den Anlagenparameter

Die Visualisierung der Ergebnisse erfolgt einerseits durch die Darstellung von Kennzahlen in ihrem zeitlichen Verlauf über die Betriebsdauer hinweg (z.B. Cash-Flow), sowie durch eine Darstellung von Kennzahlen, abhängig von einem Anlagenparameter (z.B. Amortisamtionsdauer in Abhänigkeit des Stromtarifes) in Form von Tabellen, Kurven und Tortendiagrammen (**siehe Fig. 3**).

Für den Fall einer Neuprojektierung berücksichtigt die Wirtschaftlichkeitsberechnung folgende Rahmenbedingungen:
- Investitionskosten
- Abschreibungsdauer der Investitionen
- Leistung der Anlage
- Kostensteigerungsindex
- Tarifstrukturen für Energietarife und Leistungstarife
- Konditionen für etwaig erforderliches Fremdkapital
- Steuer- und Abgabensituation

Für den Fall eines Refurbishment werden zusätzlich außerdem folgende Informationen verwendet:
- zusätzliches Arbeitvermögen der Anlage nach dem Refurbishment
- zusätzliche Leistung der Anlage nach dem Refurbishment
- Reduktion des Arbeitsvermögens über der Betriebsdauer, bzw. dessen Abhängigkeit von den Wartungs- und Instandhaltungsaufwendungen sowie den Wartungs- und Instandhaltungsintervallen
- Dauer des Refurbishments und den damit verbundenen etwaigen Stillstand der Anlage und Kosten des zu erwartenden Produktionsausfall
- Zunahme der Instandhaltungskosten der Altanlage in Folge von Verschleiß

### Modul Anlagen-View&Control:

Auf Basis der im Rahmen eines Projekts erarbeiteten Kenntnisse über Aufbau und Funktion einer Anlage wickelt das Modul Anlagen-View&Control jene Aufgaben ab, die im Rahmen der §D-Darstellung und des Betriebes von Anlagen auftreten.

Dabei werden über eine aufgebautes Meldenetz mit entsprechender Sensorik die für die Beschreibung des Zustands einer Anlage notwendigen Informationen ermittelt, gesammelt und in der Wissensdatenbank abgelegt.

Auf Basis der so ermittelten Daten ist ein Monitoring der Anlagen bzw. Anlagenteile möglich. Dieses Monitoring wird entweder direkt über das Modul Anlage-View&Control dargestellt oder über die Techniken der Anlagenvisualisierung bzw. der 3D Graphischen Animation durchgeführt.

Wird mit der Simulation-Maschine eine vorhandene Sensorik nur virtuell simuliert und entsprechende Anlagenzustände simuliert, ist so die Reaktion der Anlage auf bestimmte auftretende Zustände zu beobachten bzw. zu analysieren. Die Verwendung des 3D Graphischen Animations-Front-Ends ermöglicht ein besonders anschauliches Virtuelles Mock up.

Schließlich ist mit einem eigenen Softwaretool der Betrieb der Anlage mittels eines eigenen Steuer- und Regelkomponente möglich.

### Modul Avigator (Wissensnavigator):

Das Visuelles Front-End zur Abwicklung aller Interaktionen zwischen Nutzer und Applikation wird durch den Wissensnavigator (*Anlagen-N*avigator = Avigator) realisiert.

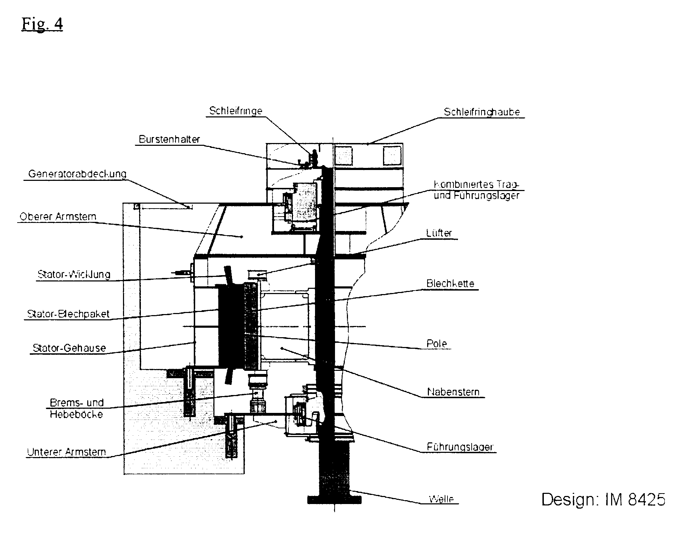

Der Avigator besteht einerseits aus einer Anzahl von Input-/Output-Fenstern (**siehe Fig. 4**). Über diese Fenster in Window-Technik wird die Anlage technisch ausgelegt und konstruiert. Dies erfolgt durch wertmäßige Angabe von technischen Eigenschaften (z.B. Leistung, Drehzahl) oder durch Auswahl von Eigenschaften aus vorgegebenen Palleten (z.B. Bauformen von Anlagenteilen).

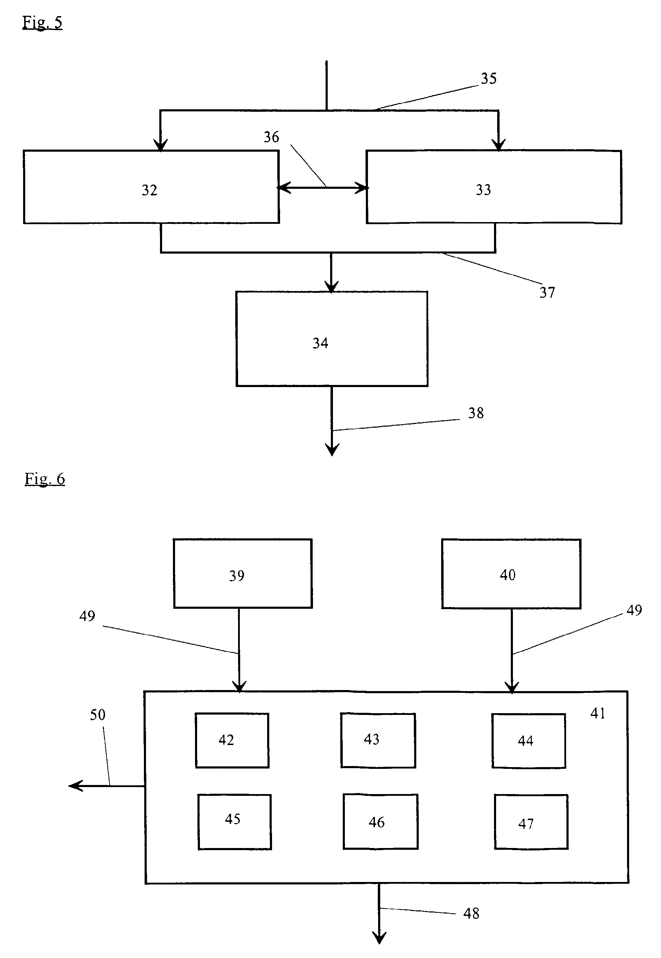

Die Anlagenvisualisierung ergänzt diese IO-Fenster dahingehend, dass die konstruierte und technisch ausgelegte Anlage in Anlagenschaubildem (Anlagen-Views), vorzugsweise in Echtzeit dargestellt wird (**siehe Fig. 5**). Jede Änderung in der Anlagenbeschreibung führt zu einer sofortigen Anpassung der gerade dargestellten Anlagenschaubilder.

Die 3D-Anlagenschaubilder werden auch dazu verwendet, Anlagenzustände zu visualisieren und Schalt- bzw. Steuerhandlungen zu setzen bzw. um bestimmte Anlagenzustände herbeizuführen. Die Anlagenschaubilder werden in Aufbau und Inhalt in der K-DB beschrieben, abgelegt und inhaltlich auf Letztstand gehalten. Der Avigator stellt ein Anlagenschaubild aufgrund dieser Informationen dar.

Die Komponente der 3D-Graphischen Animation wird verwendet um dynamische Prozesse in der Anlage zu visualisieren, Anlagenteile in ihrer Zusammensetzung darzustellen sowie ihren Eigenschaften zu beobachten. Der Avigator verwendet ein Animationstool um die 3D-Beschreibung von Anlagenteilen in der K-DB zu visualisieren. Die notwendigen dynamischen Dateninformationen (z.B. Bewegung von Laufrädern, Ablauf eines Montagevorganges) werden vom Modul Simulation-Maschine errechnet bzw. festgelegt und ebenfalls über die K-DB bereitgestellt.

Die Animation geht soweit, dass der Benutzer als Virtueller Besucher die Anlage durchwandert, Anlagenteile betrachtet und bearbeitet.

Die vierte Komponente des Visualen Front-Ends ist das Questionairy. Darunter wird ein On-Line-Finder mit Path-Viewer verstanden. Der Benutzer gibt textlich oder durch graphische Auswahl ein Stichwort vor und erhält zunächst eine zur Vorgabe sinnvolle Frage angeboten (z.B. in welchen Anlagen kommt Stichwort vor) Die K-DB wird nach Antworten auf die gestellte Frage durchsucht - die gefundenen Antworten einschließlich der Wege auf denen die Antwort ermittelt wird werden dargestellt. Die Aussagekraft der Antwort wird außerdem durch eine Fuzzy-Logic-Angabe ergänzt.

Die für die Fragenbeantwortung notwendigen Informationen werden vom Modul Anlagen-Expert bereitgestellt. Der Austausch der Daten erfolgt selbstverständlich über die K-DB.

Fig. 5 zeigt in schematischer Form die Organisation der mathematischen Modelle, bzw. den prinzipiellen Ablauf einer Modellierung eines Generators.

Dabei werden über eine Einrichtung zur Eingabe (in **Fig. 5** nicht dargestellt) eine Mindestanzahl von Daten zur Auslegung eines Generators in einer Datenbank, zum Beispiel einer K-DB, abgelegt (in **Fig. 5** nicht dargestellt). Aus dieser Datenbank werden mittels einer Verbindung **35** diese und gegebenenfalls andere Daten ausgelesen und in ein Programm zur elektromagnetischen Auslegung eines Generators, SYMAENT **32**, und ein Hilfsprogramm zur elektromagnetischen Auslegung eines Generators, kurz SMAUP **33** eingelesen. Beide Programme wurden in FORTRAN erstellt, und bestehen aus einer FORTRAN-gemäßen Formulierung einer Reihe von mathematischen Modellen zur Bestimmung der elektromagnetischen Eigenschaften eines Generators.

Das Programm SYMAENT **32 (Fig. 5)** wird nun in **Fig. 6** (dort mit **41** bezeichnet) näher erläutert:

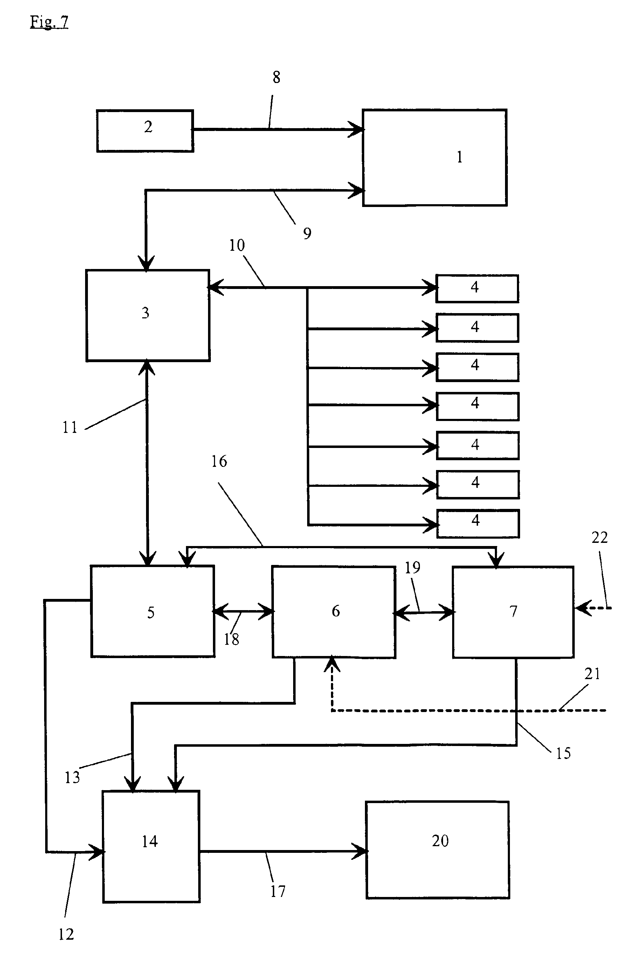

Dabei stehen sogenannte Mindestvorgabewerte 39 und optionale Daten **40** durch Verbindungen **49** mit dem Programm SYMAENT **41** in Verbindung. SYMAENT teilt sich wiederum in verschiedene Programmteile **42, 43, 44, 45, 46, 47**, jeweils zuständig für die Auslegung einer bestimmten elektromagnetischen Eigenschaft, auf. Durch 50 steht SYMAENT mit einem Programm SMAUP **32 (Fig. 5),** welches erforderliche Hilfsberechnungen, beispielsweise zur Bestimmung von Reaktanzen und Induktivitäten, durchführt, in Verbindung. Schließlich werden über eine Verbindung **48** Daten an die mechanische konstruktive Auslegung eines Generators (siehe **Fig. 7**) gesandt.

SYMAENT **41** dient wie bereits erwähnt, der elektromagnetischen Auslegung einer Synchronmaschine.

### Mindestvorgabewerte sind:

Nennscheinleistung, Nennspannung, Nennfrequenz, Nennleistungsfaktor, Schleuderdrehzahl, Bauart (Rohrmaschine oder Vertikalgenerator,...)

Diese Mindestvorgabewerte werden in **Fig. 6** durch Referenznummer **39** bezeichnet.

Die Maschinenauslegung kann durch die Eingabe optionaler Daten für bestimmte Randbedingungen gesteuert werden:

Mindestwert des Massenträgheitsmomentes, Ausnutzung der Maschine, zulässige Erwärmung, Mindestwert des Leerlauf/Kurzschlußverhältnisses, Vorgabewerte für Blechpaketlänge, Außen- oder Innendurchmesser oder Gehäuse-außendurchmesser, Maximaler Erregerstrom

Diese optionalen Daten werden in **Fig. 6** durch Referenznummer **40** bezeichnet.

### Nun eine Beschreibung der einzelnen Programmteile:

### HAUPTABME 42

Bestimmung der Hauptabmessungen (Durchmesser D1 und Länge L1 des Statorblechpaketes) und der Kenngrößen Luftspaltinduktion BL und Statorstrombelag A/cm:

Das Programm bestimmt diese Kenngrößen basierend auf ausgeführten Maschinen. Dabei werden die oben angeführten Vorgabewerte berücksichtigt.

In den Programmteilen NUZASTAB, NUZASPULE und BEWERT erfolgt die Auswahl der Statorwicklung:

### NUZASTAB 43

### Entwurf der Statorwicklung für Röbelstäbe

Zunächst werden alle Nutenzahlen ermittelt, die erfolgversprechend sind. Die Grenzen der möglichen Nutenzahlen werden einerseits durch eine minimale und maximale Nutteilung (Grenzwerte werden vom Programm für jede Maschine in Abhängigkeit von Polteilung, Statorspannung,..festgelegt) und einer maximal zulässigen Abweichung vom Zielwert der Luftspaltinduktion bestimmt. Mit allen möglichen Nutenzahlen erfolgt im Unterprogramm NUTENROE die Nutauslegung der Statorwicklung. Die Anzahl und die Abmessungen der Teilleiter des Röbelstabes werden unter Berücksichtigung der notwendigen spannungs-abhängigen Isolationsstärken so bestimmt, dass Kenngrößen der Erwärmung und ein Maximalwert der Statorzahninduktion eingehalten wird. Die Ausführbarkeit des Röbelstabes wird überprüft.

### NUZASPULE 44

### Entwurf der Statorwicklung für Spulenwicklungen

Analog wie für die Röbelstäbe werden die erfolgversprechenden Nutenzahlen und die Zahl der Windungen pro Nut bestimmt. Bei der Auslegung der Teilleiteranzahl und der Teilleiterabmessungen werden Vorgabewerte für die maximale Spulenbreite und Spulenhöhe nicht überschritten. Können die Kenngrößen der Erwärmung mit den vorgegebenen Spulenabmessungen nicht eingehalten werden, so wird die entsprechende Wicklungsvariante ausgeschieden.

### BEWERT 45

In diesem Programmteil erfolgt die Bewertung der Wicklungsvarianten unter Berücksichti-gung der Abweichung von Sollwerten (Nutteilung, Luftspaltinduktion,..) und anderen Kenngrößen, die den Aufwand für die Herstellung des Blechpaketes und der Wicklung bestimmen. In einer zukünftigen Programmversion könnte der Vergleich der möglichen Wicklungsvarianten durch Kalkulation der Herstellkosten für den Aktivteil und eine genauere Berechnung der Statorwicklungserwärmung sowie der Verluste weiter verbessert werden.

### POLENT 46

In diesem Programmteil erfolgt die Bestimmung der Abmessungen des Poles und der Rotorwicklung (Abmessungen des Kupfers, Windungszahl der Polwicklung).

Beim Polentwurf müsssen folgende Daten eingehalten werden:

Mindestabstand zweier benachbarter Polwicklungen, Maximale Polkerninduktion, Erwärmung der Rotorwicklung, Leerlauf/Kurzschlußverhältnis,Maximaler Erregerstrom

Das Programm verändert Polabmessungen, Dimension und Windungszahl der Polwicklung und Luftspalt bis die Bedingungen eingehalten werden. Wird mit den gegebenen Hauptab-messungen keine Lösung gefunden erfolgt ein Rücksprung in das Programm HAUPTABME und die Werte für Dli, L1, BL und A1 werden korrigiert.

Entsprechend der Fliehkraft des Poles bei Schleuderdrehzahl erfolgt die Auswahl der Polbe-festigung (Schraubpol, Einfach-, Doppelschwalbenschwanzpol oder Kammpol).

### MAENT2 47

Bestimmung der restlichen für die Berechnung mit dem elektromagnetischen Nachrechen-programm SMAUP **32** erforderlichen Daten:
- Insbesondere des Rotorinnendurchmesser unter Berücksichtigung der Fliehkraftbeanspruchung im Läuferjoch und dem erforderlichen Schwungmoment.
- Bei Blechkettenläufer erfolgt die Grobauswahl der Segmentanzahl des Läuferjoches.
- Auslegung der Dämpferwicklung

**Fig. 7** beschreibt schematisch in einer nicht einschränkenden Ausführungsform den Verfahrensteil, in dem nach einer elektromagnetischen Auslegung die weitere mechanische konstruktive Auslegung des Generator, beziehungsweise die Generierung von virtuellen Objekten vorgenommen wird. Die diesbezüglichen Programme und Routinen (siehe **Fig. 7**) sind in C/C++ ausgeführt.

Ausgehend von einer optionalen Einrichtung zur Zwischenspeicherung von Daten, welche aus der elektromagnetischen Berechnung stammen werden mittels einer Verbindung **8** Daten in eine Datenbank **1**, zum Beispiel eine K-DB, gelesen und abgelegt.

Ein Hauptprogramm **3** organisiert in der Folge den Zugriff, sowie den Datenaustausch zwischen Daten und Verfahren in einer Datenbank **1**, Routinen **4**, und einem Objekt **5**, beispielsweise das Objekt Lager. Die Routinen **4** verknüpfen Daten und mathematische Modelle zur Erzeugung von Objekt **5**, welches seinerseits in Datenbank **1** abgelegt wird. Mit einer bidirektionalen Verbindung **10** treten die Routinen **4** mit dem Hauptprogramm **3** in Kontakt. Über eine bidirektionale Verbindung **11** tritt Objekt **5** in Kontakt mit dem Hauptprogramm **3**. Objekt **6**, beispielsweise das Objekt Kühler, und Objekt **7**, beispielsweise das Objekt Welle, stehen ihrerseits über eine Verbindung **21**, bzw. **22** in Kontakt mit jeweils einem Hauptprogramm. Die einzelnen Objekte stehen durch Verbindungen **16, 18, 19** miteinander in Kontakt, und beeinflussen auf diese Weise einander gegenseitig. Schließlich bildet über Verbindungen **12, 13** und **15** eine Ausgaberoutine **14** die Objekte als Simulation einer Industrieanlage auf einer Einrichtung zur Ausgabe **20** ab. Dabei entsprechen insbesondere einzelne Objekte den korrespondierenden Einrichtungen einer gegebenenfalls realen Industrieanlage.

Laut **Fig. 7** werden im folgenden zur Verdeutlichung der mechanischen konstruktiven Auslegung eines Generators mittels mathematischer Modelle der Ablauf dieser einzelnen Routinen, sowie die einzelenen Routinen selbst detaillierter vorgestellt:

Bei der konstruktiven Auslegung werden elektromagnetische Hauptdaten aus einer Datenbank gelesen, und in einem Hauptprogramm für die mechanische Auslegung verwendet. Für die mechanische Auslegung werden dabei verschiedene Teilroutinen verwendet, so etwa Teilroutinen zur Berechnung lüfterspezifischer Kennwerte, zur Festigkeitsberechnung für Rotor, und zur Festigkeitsberechnung für Armsterne.

Ein Programm STATOR ermittelt dabei iterativ den erforderlichen Durchmesser des Statorgehäuses. Dabei werden in einem ersten Schritt die Wanddicken des Gehäuses, die sogenannten Rippenstärken sowie die maximalen Transportabmessungen, welche einerseits bekannt oder vorgegeben sein müssen in einer Datenbank gesammelt. Abhängig vom Außendurchmesser wird eine Zahl der Statorsohlplatten festgelegt, die zur Aufstellung am Fundament dienen.

In einem Programm SOHLPLATTE wird nach mathematischen Gleichungen die Abmessung der Fundamentierung ermittelt, wobei je nach Bauweise ebene, hohe, oder Sohlplatten mit Luftdurchlass vorgesehen werden.

In einem Programm KÜHLER wird der Kühlverlust berechnet. Eine eigene Kühlerdatenbank mit den Werten der abzuführenden Verluste, Kühloberfläche, Abmessungen, Massen und Preisen wird zusätzlich erstellt um Angebotsdaten in kurzer Zeit erstellen zu können.

Ein Programm ROTOR legt den Rotor des Generators aus.

Für die Auslegung des Lüfters wird nach einem mathematischen Modell je nach Erfordernis ein Radial- oder Axiallüfter evaluiert. Dabei wird der Durchmesser des Lüfters in Abhängigkeit des Rotordurchmessers angenommen, wobei Anzahl und Breite der Lüfterschaufeln einer Datenbank entnommen werden. Schließlich wird durch ein Programm der Axiallüfter bzw. der Radiallüfter für den benötigten Überdruck optimiert. Das Ergebnis dieser Berechnungen wird ebenfalls in einer Datenbank dargestellt.

Der Rotor wiederum kann je nach bevorzugter Ausführung als Jochring, Blechkette, Läuferkörper oder Wellenläufer ausgeführt werden.

Bei einer Ausführung als Jochring kann vorzugsweise zwischen Polschrauben-, oder Schwalbenschwanzbefestigung gewählt werden. Dabei erfolgt in Abhängigkeit von der, bei der Durchgangsdrehzahl auftretenden Polfliehkraft die Dimensionierung der Polschrauben mittles einem Programm POLSCHRAUBE.

Bei einem Blechkettenrotor ist eine sehr umfangreiche Berechnung für die Auslegung des Kettenbleches erforderlich. Dabei wird in Abhängigkeit vom Rotordurchmesser und der Polzahl mit einem Programm KETTE ein optimaler Verschichtungsfaktor berechnet. Dieser hat nicht nur enormen Einfluß auf die Festigkeit des gesamten Rotors, sondern in weiterer Folge auf Kosten und Montagezeiten.

Die Blechkettenbolzen werden dabei so modelliert, dass die Kettenbleche aufgrund der Reibungskraft, die durch die Bolzenvorspannung erzeugt wir, zusammenhalten.

Die Verbindung Kette zu Welle kann entweder als geschweißter Nabenstern mit Armen, oder als Stahlgußnabe mit entsprechend ausgebildeten Armen, sowie als Nabenstern mit massiven Nabenringen ausgeführt werden.

Mit einem Programm RADBERKW wird die Festigkeit der Kette mit der Rotorkonstruktion gerechnet. Für den Fall, dass die Beanspruchungen der Materialien zu hoch sind, muß die Blechkette iterativ geändert werden.

Das Programm BREMSEN legt die Bremsen in Abhängigkeit von der Höhe des Trägheitsmomentes, der Bremsdauer und eines angenommenen Bremsdruckes aus, und ermittelt die erforderlichen Kolbendurchmesser des Bremsbockes und die Anzahl der am Umfang verteilten Bremsen.

Mit den angegebenen Turbinenlasten und der errechneten Generator-Rotormasse wird das Traglager mit einem Programm L1 berechnet.

Es erfolgt dabei eine Berechnung der Anzahl der Segmente, deren Abmessungen, der Temperaturen für das verwendete Schmier-Öl und Lagermetall, sowie der auftretenden Lagerverluste. Dasselbe Prozedere wird für die Führungslager durchgeführt. Die tragenden Teile, sowie die Armsterne werden auf ihre Beanspruchung untersucht. Dies erfolgt mit dem Programm ARMSTE. Die Armsterne werden wie die Blechkette automatisch nachkorregiert, bis die Spannungen einen akzeptablen Wert erreichen.

Die Auslegung der Schmierölversorgung erfolgt durch ein Programm ÖLANLAGE.

Reibungs- und Ventilationsverluste des gesamten Generator-Luftströmungsnetzwerkes sollen mittels des Programmes FLOW modelliert werden. Die dazu erforderlichen Werte wie die Hauptdaten, die Statorabmessungen, die Poldimensionen, Rotorabmessungen und Lüfterdaten werden mit der Datenbank kommuniziert.

Die Modellierung der Biegefestigkeit des gesamten Wellenstranges inklusive aller Zusatzmassen erfolgt mittels BKDRE. Um diese Modellierung durchführen zu können, müssen alle Wellenabschnittsdurchmesser und -längen und die darauf wirkenden Massen und Trägheitsmomente bekannt sein. Die benötigten Werte wie z.B. Lagersteifigkeiten werden wiederum aus der Datenbank entnommen. Bei ungünstigen Ergebnissen müssen die Daten am Generator iterativ geändert werden bis die Ergebnisse korrelieren.

Nach einer ersten vollautomatischen Modellierung des Generators mit einem Programm NOASK, kann mit dem Generatorauslegungsprogramm eine Feinabstimmung der elektromagnetischen Daten erfolgen. Hierzu ist vorgesehen, in die Eingabemaske für das elektromagnetische SMAUP-Generatorauslegungsprogramm händisch einzugreifen. Das heißt z.B, dass der vom Entwurfsprogramm vorgeschlagenen Statorpaketaußendurchmesser so lange verändert werden kann, bis die Statornutenzahl, die Nut- und Kupferdimensionen, die Polabmessungen, die Querschnitte der Polwicklung, die Jochdurchmesser und viele anderen Daten mit den Parameter der optimierten Maschine übereinstimmen.

Für den nicht geübten Anwender soll ein automatisches Justierungsprogramm unterstützend diese Optionen ermitteln.

Dieses Justierungsprogramm bietet auch die Möglichkeit der logischen Verknüpfung aller betroffenen Daten und deren Änderungen über der Modellierung.

Dabei sollen zum Beispiel bei Änderung des Luftspaltes mit einem fixen Statorpaketaußendurchmesser automatisch alle davon abhängigen Rotordurchmesser mitverändert werden, oder bei einer Änderung des Querschnittes des Wicklungskupferteilleiters sollen sich automatisch Nutbreite und Nuthöhe anpassen.

Nachdem schließlich mit dem SMAUP-Programm eine erfolgreiche elektromagnetische Berechnung durchgeführt wurde, kann man zur Eingabemaske für die konstruktive Auslegung verzweigen, und händisch eingreifen.

Dabei können auch bestehende konstruktive Bedingungen berücksichtigt werden, wie Aufstellungshöhen oder Krafthausabmessungen.

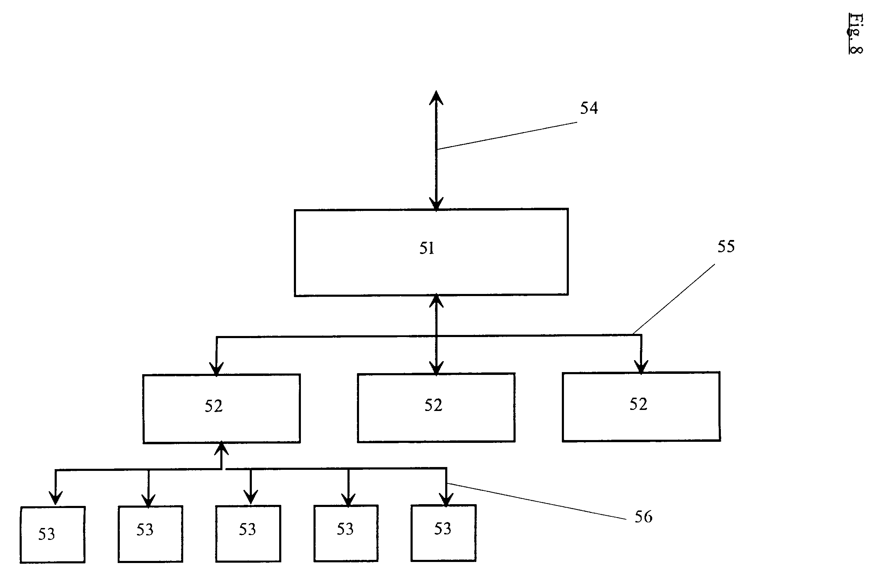

In **Fig. 8** ist eine bevorzugte nicht einschränkende Ausführungsform der Organisation von Informationen ersichtlich, welche sich im wesentlichen einer hierarchischen Strukturierung der Informationen bedient. Hierbei werden Informationen in einer hierarchischen Struktur abgelegt, und sind über diese wieder abrufbar.

Dabei wird beispielsweise innerhalb einer Simulation einer Industrieanlage ein Objekt, etwa ein Objekt Generator, mittels einem virtuellen Werzeug betätigt. Durch das virtuelle Betätigen, oder je nach Ausführungsform auch durch das virtuelle Berühren wird das Informationsverwaltungs- bzw. Informationsdarstellungssystem aktiviert. Die Informationen befinden sich in einem hierarchisch konzeptionierten Ordnungssystem. Durch Betätigen des Objektes erreicht der Anwender durch **13** eine der virtuellen Ablagen **10.** Diese virtuelle Ablage entspricht beispielsweise einem Dokument betreffend dieses Objekt, oder diese Einrichtung. Dieses Dokument, welches an einer Einrichtung zur Anzeige von Informationen ausgegeben wird, enthält Verweise zu Ablagen niedrigerer Hierarchie **11** oder aber auch Querverweise zu anderen Informationen. Durch Anwählen dieser Verweise gelangt der Anwender über **14** in eine Ablage niedrigerer Hierarchie **11**. Diese Ablagen entsprechen wiederum beispielsweise Dokumenten die eine Eigenschaft oder einen Teilen der betätigten Einrichtung beschreiben. Wiederum enthält dieses Dokument Verweise auf Ablagen **14**, sowie gegebenenfalls Querverweise zu anderen Informationen. Denkbar ist weiters die Ablage von Simulationssequenzen, wie etwa einer Sequenz zur Verdeutlichung der Montage einer Einrichtung.

## Patentansprüche

1. Eine Methode zur Simulation und/oder Überwachung und/oder Steuerung einer industriellen Anlage und/oder deren Einrichtungen bzw. Teile solcher Einrichtungen mittels einer oder mehrerer elektronischer Datenverarbeitungseinheiten, **dadurch gekennzeichnet, dass** Prozeßparameter betreffend den Betrieb der industriellen Anlage oder deren Einrichtungen bzw. Teile in Verbindung mit technischen Informationen betreffend den Aufbau der industriellen Anlage deren Einrichtungen oder eines Teiles, visualisiert in eine dreidimensionale Simulation dieser Anlage bzw. Einrichtung oder Teiles eingebunden und abrufbar werden.

2. Methode nach Anspruch 1, dadurch gekennzeichnet, dass einem oder mehreren virtuellen Objekten der Simulation Informationen betreffend die zugehörigen Einrichtungen bzw. Teile der realen industriellen Anlage zugeordnet werden.

3. Methode nach Anspruch 1 oder 2, **dadurch gekennzeichnet, dass** im Rahmen einer Informationsverwaltung der virtuelle örtliche und/oder der virtuelle zeitliche Zusammenhang verschiedener Informationen zu Bestandteilen der Simulation dargestellt und intuitiv sowie interaktiv erfahrbar wird.

4. Methode nach einem oder mehreren der Ansprüche 1 bis 3, **dadurch gekennzeichnet, dass** durch ein virtuelles Betätigen, insbesondere durch ein virtuelles Berühren eines Bestandteiles der Simulation, vorbestimmte Informationen betreffend die korrespondierende reale Einrichtung bzw. Teil der industriellen Anlage abgerufen und dargestellt werden.

5. Methode nach einem oder mehreren der Ansprüche 1 bis 4, **dadurch gekennzeichnet, dass** bei Eingabe mindestens eines kennzeichnenden Begriffes, und/oder Parameters, die durch diesen Begriff und/oder Parameter gekennzeichnete Information, in ihrem virtuellen Zusammenhang in der Simulation durch einen Navigator, lokalisiert und angezeigt wird.

6. Methode nach einem oder mehreren der Ansprüche 1 bis 5, **dadurch gekennzeichnet, dass** zur Prozeßüberwachung einer realen Anlage die Simulation unidirektional über diese Anlage mit Informationen versorgt, und Prozeßinformationen, wie auch Anlageinformationen selbst in Echtzeit über die Simulation abgelegt und dargestellt werden.

7. Methode nach einem oder mehreren der Ansprüche 1 bis 6, **dadurch gekennzeichnet, dass** graphische Expertensysteme die graphische Umsetzung der Informationen bei der Informationsverarbeitungt, sowie die Eingabe und die Bedienung durch den Anwender unterstützen.

8. Methode nach einem oder mehreren der Ansprüche 1 bis 7, **dadurch gekennzeichnet, dass** insbesondere Konstruktionszeichnungen einer industriellen Anlage oder deren Einrichtungen bzw. Teile solcher Einrichtungen in die Informationsverwaltung aufgenommen werden.

9. Methode nach einem oder mehreren der Ansprüche 1 bis 8, **dadurch gekennzeichnet, dass** insbesondere Herstellerspezifikationen einer industriellen Anlage oder deren Einrichtungen bzw. Teile solcher Einrichtungen in die Informationsverwaltung aufgenommen werden.

10. Methode nach einem oder mehreren der Ansprüche 1 bis 9, **dadurch gekennzeichnet, dass** insbesondere Informationen zu Betriebsabläufen einer industriellen Anlage oder deren Einrichtungen bzw. Teile solcher Einrichtungen in die Informationsverwaltung aufgenommen werden.

11. Methode nach einem oder mehreren der Ansprüche 1 bis 10, **dadurch gekennzeichnet, dass** insbesondere Informationen zur Montage einer industriellen Anlage oder deren Einrichtungen bzw. Teile solcher Einrichtungen in die Informationsverwaltung aufgenommen werden.

12. Methode nach einem oder mehreren der Ansprüche 1 bis 11, **dadurch gekennzeichnet, dass** insbesondere Informationen zur Wartung einer industriellen Anlage oder deren Einrichtungen bzw. Teile solcher Einrichtungen in die Informationsverwaltung aufgenommen werden.

13. Eine Methode nach einem der Ansprüche 1 bis 12, **dadurch gekennzeichnet, dass** die industrielle Anlage ein Kraftwerk zur Erzeugung elektrischer Energie ist.

14. Eine Methode nach einem oder mehreren der Ansprüche 1 bis 12, **dadurch gekennzeichnet, dass** die Einrichtung eine elektrische Maschine, insbesondere ein Generator ist.
